# EUROPEAN PATENT APPLICATION

(11) **EP 2 151 163 A1**
(43) Date of publication of application: **10.02.2010**
(21) Application number: 08161856.3
(22) Date of filing: 05.08.2008
(51) Int. Cl.: A01K 61/00

(54) **Track, tractor system and safety device**

(71) Applicant: Island Marine Systems Limited, Vidlin Shetland Islands ZE2 9QB (GB)
(72) Inventor: Johnson, Ivor Gilbert, ZE2 9QB, Scotland (GB); Johnson, Angus, ZE2 9QB, Scotland (GB)
(74) Representative: Archer, Graham John

(57) **Abstract**

A track 2 comprises first and second elongate flexible members 4 and 6. A flexible net 8 extends between the flexible elongate members 4 and 6 to form a track. A tractor 20 comprises a body 26 housing drive means (not shown) such as an electric motor. First, second and third wheels 22a, 22b and 22c are mounted on respective axles 24a, 24b and 24c and are arranged to be driven by the drive means. As a result of the use of elongate flexible members 4 and 6 and a flexible fabric 8, the net 2 is flexible and can be deformed into any desired shape. The track 8 can therefore be threaded through wheels 22 such that the wheels 22 rest under gravity on lower flexible elongate member 6 to retain the tractor 20 on track 2. Overlap by all three wheels into the net allows the tractor to clamp itself to the net.

## Description

The present invention relates to a track and a tractor and safety device for a track, and relates particularly, but not exclusively, to a track, tractor system and safety device for use in aquaculture.

Fish farming is a form of aquaculture that involves farming fish in enclosures known as cages in seas and lakes. A cage generally comprises a circular walkway and handrail floating on the surface of the body of water in use below which a net is suspended under the water to contain and protect fish until they can be harvested.

This type of fish farming involves intensive manual labour to clean and change nets, both of which require rope handling skills. Also, manual labour is involved in tasks such as camera deployment in the cage and general maintenance work on the net and cage structure. It is also desirable to improve the safety of persons working on sea cages.

A preferred embodiment of the present invention seeks to overcome the above disadvantages of the prior art.

According to an aspect of the present invention, there is provided a track comprising:
a first elongate flexible member arranged substantially parallel to a second elongate flexible member; and
a flexible net extending between said first and second elongate flexible members.

This provides the advantage of a flexible track that can be arranged to run around the perimeter of an enclosure having any shape. Because the track is flexible, it has no difficulty in extending around the perimeter of any shape of enclosure. This also provides the advantage that the track can be removed from an enclosure of a first shape and be easily fitted to an enclosure of a second shape. The track can also be made into a continuous loop.

In a preferred embodiment, the net forms a closed loop encircling said first and second elongate flexible members, the net being crimped or stitched between said first and second elongate members.

This provides a relatively straightforward method of manufacturing the track and attaching a net to the track.

Said first elongate flexible member may have a substantially hollow portion and further comprise an elongate slot formed therein, the flexible net being attached to a stop member disposed inside said first elongate member, the stop member having a dimension larger than the width of said elongate slot to prevent removal of the flexible net and stop member from said first elongate flexible member.

This provides a relatively straightforward method of manufacturing the track and attaching a net to the track.

According to another aspect of the present invention, there is provided a tractor for a track comprising a first elongate flexible member arranged substantially parallel to a second elongate flexible member and a flexible net extending between said first and second elongate flexible members, the tractor comprising:
a body;
a first wheel rotatably mounted to the body and arranged to engage a first side of a net in use;
a second wheel rotatably mounted to the body and arranged to engage a second side of the net opposite to the first side; and
drive means for rotating at least one of the wheels to move the tractor along the net;
wherein said first and second wheels are arranged to rest on said first or second elongate member in use to retain contact between the wheels and the net.

This provides the advantage of a tractor that is relatively straightforward to mount onto a track that can extend around an enclosure of any shape. As a result of the fact that the first and second wheels are arranged to rest on the first or second elongate member in use to retain contact between the wheels and the net, this provides the advantage that no other mechanism is required to ensure that the tractor remains connected to the track because the force of gravity ensures that the tracks remain connected to a net. Also, opposing wheels are arranged to overlap into a net in use to clamp the tractor to the net.

In a preferred embodiment, the tractor further comprises a third wheel rotatably mounted to the body and arranged to engage said first side of the net, wherein said second wheel is disposed between said first and third wheels along the direction of the net.

By providing first, second and third wheels, wherein a second wheel is arranged opposite to and between the first and third wheels, this provides the advantage of stabilising the tractor as it moves along a net.

In a preferred embodiment, the tractor further comprises a winch.

This provides the advantage that the tractor can be used to automate many rope handling tasks that were previously performed by manual labour.

According to a further aspect of the present invention, there is provided a track and tractor system comprising a track as defined above and a tractor as defined above.

This provides the advantage of a flexible track and tractor system in which the tractor can move in an uninterrupted circular manner around the track. Use of the track and tractor system mounted to a sea cage used in aquaculture provides the advantages of making the following tasks, amongst others, more straightforward: camera deployment, net lifting, mort removal, biomass estimation, water quality metering, net cleaning and remote net inspection.

According to a further aspect of the present invention, there is provided a safety device comprising:
a body slidably mountable on a track, the body defining an inner surface arranged to partially surround an outer surface of a track in use to prevent removal of the body from the track, the body further defining a gap to enable the body to slide past obstacles projecting from said track; and
attachment means disposed on the body to enable a cord to be attached to the body.

This provides the advantage of a safety device to which a harness can be attached that can be used on existing tracks or railings where protrusions, such as railing supports, prevent rings from sliding along the tracks and railings. The safety device can therefore travel much further along a railing or track providing a much more useful and flexible system.

The body may define an elongate sleeve and the gap may be defined by an elongate slot formed in the sleeve.

The body may further comprise a plurality of protrusions disposed on the inner surface.

This provides the advantage of reducing friction between the body and the track to which it is attached.

The attachment means may comprise an eyelet.

According to another aspect of the present invention, there is provided a track and safety device system comprising a track according as defined above and a safety device as defined above.

This provides the advantage of a flexible track the can be shaped to run along a perimeter of any shape, and a safety device for a harness that can be attached to the track.

Preferred embodiments of the present invention will now be described, by way of example only and not in any limitative sense, with reference to the accompanying drawings in which:
Figure 1 is a perspective view of a net track and tractor embodying the present invention;
Figure 2 is a top view corresponding to Figure 1;
Figure 3 is a perspective view corresponding to Figure 1 showing a tractor with a winch;
Figure 4 is a schematic view corresponding to Figure 2 showing the movement of the tractor along the net track;
Figure 5 is a diametric cross section of a circular sea cage showing an application of the net track and tractor in sea farming; and
Figure 6 is a perspective view showing an alternative means of attaching the net to the elongate flexible members and also showing a safety device for use with the net track.

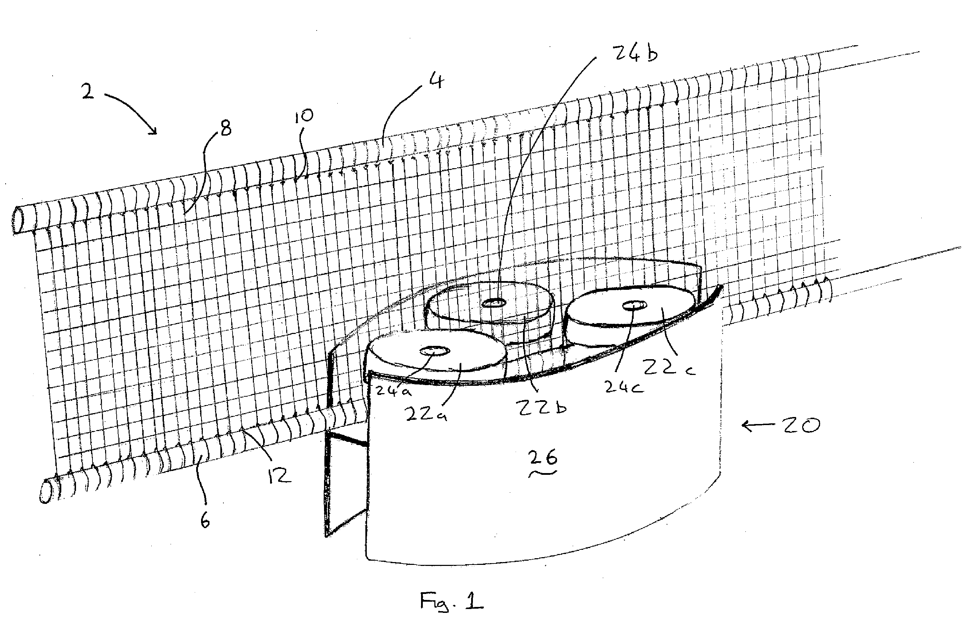

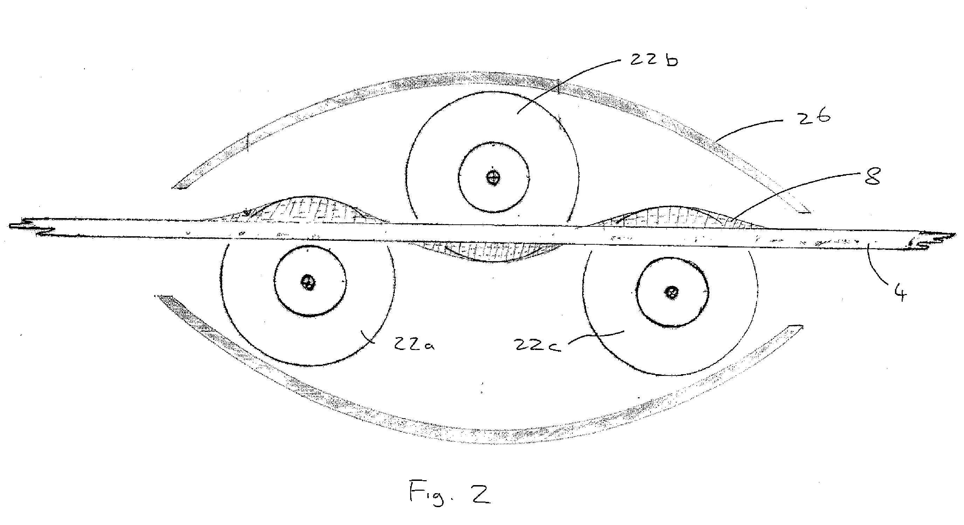

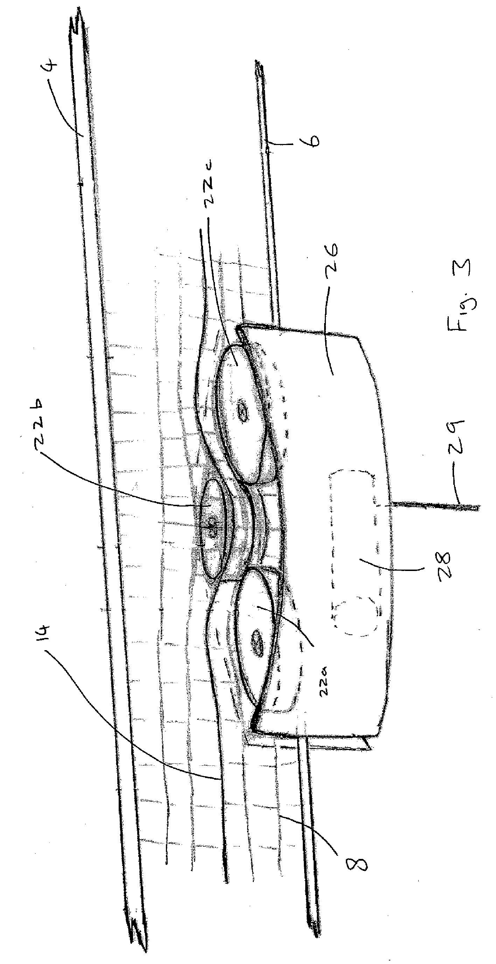

Referring to Figures 1 to 4, a track shown generally by 2 comprises first and second elongate flexible members 4 and 6 which may be formed for example by flexible polymeric tubing, rope or steel cable depending on the particular requirements of the track. A flexible net 8 formed from for example fabric such as nylon, dyneema [registered trade mark] or any other flexible netting material, extends between the flexible elongate members 4 and 6 to form a track. The net 8 may be a circular net that is looped around the elongate members 4 and 6 and crimped or stitched either at the edges of the tubular members 10 and 12 or at a point along the middle of the net such as 14 (Figure 3) to form the track.

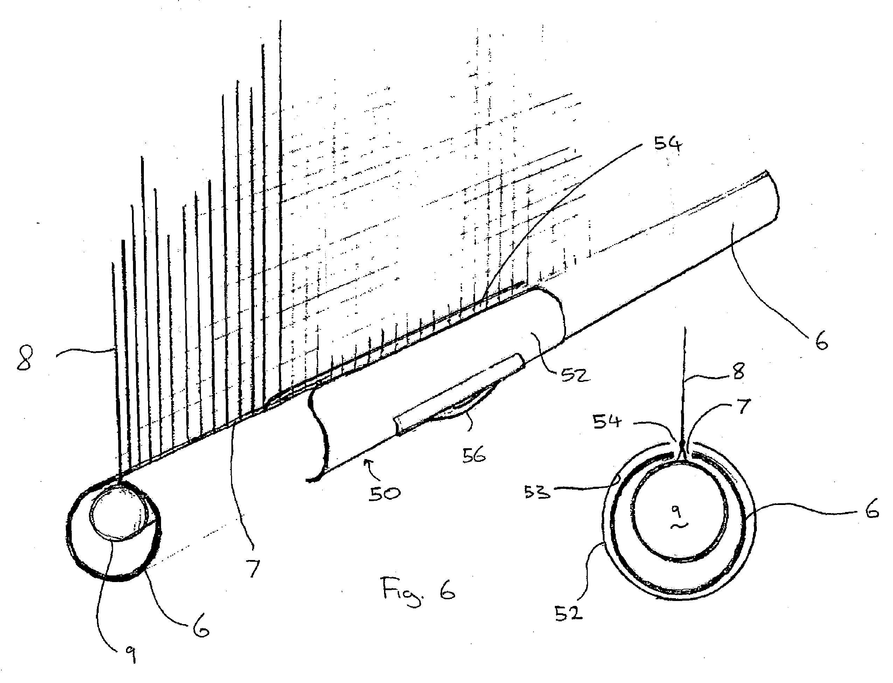

Alternatively, referring to Figure 6, the elongate flexible member 6 may comprise an elongate slot 7 and may be substantially hollow, or have several hollow portions formed along its length. A stop member having a dimension larger than the width of slot 7, such as a net restraining rope 9, is disposed inside the elongate flexible member 6. The net 8 is attached to restraining rope 9 and rope 9 cannot be pulled through slot 7 because it is larger than the slot such that the net 8 is attached to elongate flexible member 6. In the embodiment shown, the track is approximately one metre in depth although the net track can be made any size to suit a particular application.

A tractor 20 comprises a body 26 housing drive means (not shown) such as an electric motor. First, second and third wheels 22a, 22b and 22c are mounted on respective axles 24a, 24b and 24c and are arranged to be driven by the drive means as will be familiar to persons skilled in the art. One or more of the wheels may be powered. An umbilical (not shown) may be provided to supply power to the drive means. Alternatively, the drive means can be powered by an onboard battery.

As a result of the use of elongate flexible members 4 and 6 and a flexible fabric 8, the net 2 is flexible and can be deformed into any desired shape. The track 8 can therefore be threaded through wheels 22 such that the wheels 22 rest under gravity on lower flexible elongate member 6 to retain the tractor 20 on track 2. Overlap by all three wheels into the net allows the tractor to clamp itself to the net. Instead of a third wheel, a fixed guide (not shown) could be used to stabilise the tractor on the net.

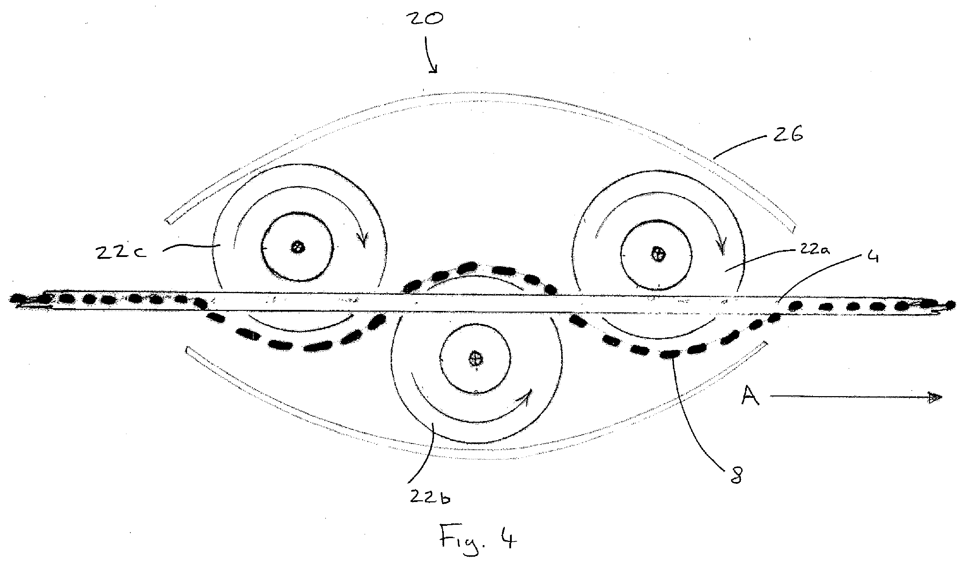

Referring to Figure 4, the drive means may comprise a gearbox (not shown) if more than one wheel is required to be powered to drive the wheels disposed on opposite sides of the net in opposite directions. For example, wheels 22a and 22c may be driven in a clockwise direction and wheel 22b on the other side of the net 8 may be driven in an anticlockwise direction. Driving the wheels 22 in this manner advances the tractor 20 along net 8 in the direction of arrow A. A controller (not shown) such as a remote control wireless unit or onboard pre-programmed unit may be provided for a user to enable the user to reverse the direction of the tractor 20 on the net 8.

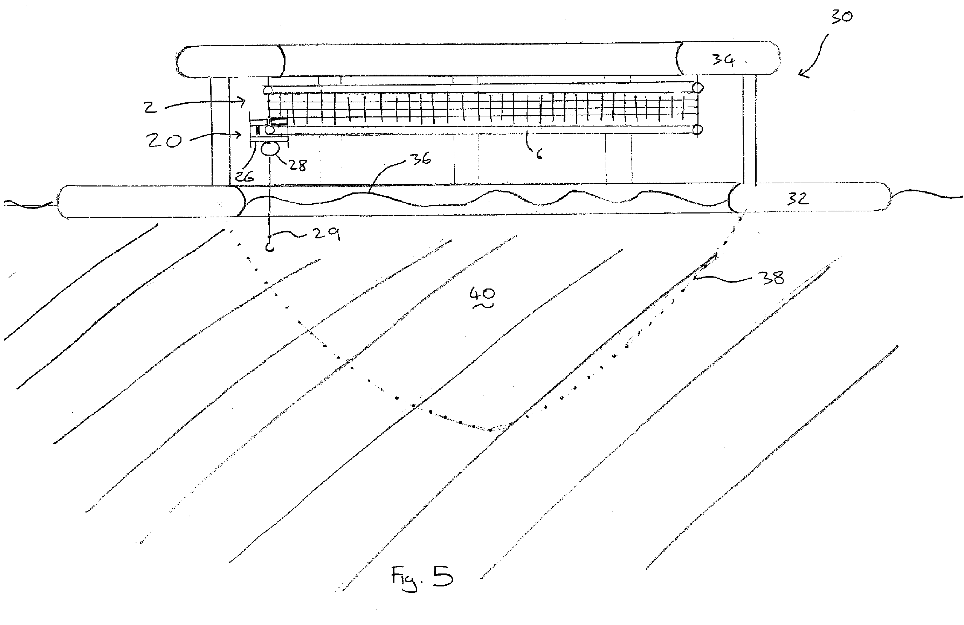

Referring to Figure 5, an example of how the track 2 and tractor 20 can be used will be described. However, it should be understood that the track 2 and tractor 20 can be used for any application which requires a deformable track and automated tractor.

A sea cage shown generally by 30 is used in aquaculture to farm fish. The sea cage 30 comprises a circular walkway 32 and circular handrail 34. The sea cage walkway 32 floats on the surface of the sea 36 or another body of water. A net 38 is supported below walkway 32 to trap fish in the interior 40 of the net. To clean net 38, a worker is generally required to walk around walkway 32 and move a cleaning implement up and down net 38 by hand. Also, in order to change and pull up nets, workers on walkway 32 are generally required to pull the net 38 up by hand using ropes.

Consequently, in order to reduce the amount of manual labour required to maintain the cage 30, net track 2 can be suspended from cage handrail 34 to run in a continuous circle around the cage 30. Tractor 20 is suspended from lower flexible elongate member 6. A winch 28 having cable and hook 29 is supported by body 26 of tractor 20 and may be powered by umbilical (not shown). Winch 28 can therefore be used to move a cleaning implement up and down the inner surface of net 38. Winch 28 can also be used to replace other rope handling task that are usually performed manually.

Furthermore, because track 2 is flexible, the track can be fitted to other non-circular shaped cages. Also, because the net track 2 of Figure 5 is continuous, the tractor can move around the track continually in an unrestricted fashion.

Referring to Figure 6, a safety device 50 comprises a sleeve 52 formed from a rigid material such as strong plastic, steel, Kevlar etc. Rigid sleeve 52 defines an elongate slot 54 to enable the sleeve 52 to slide along elongate member 6 but still avoid contact with net 8. Because the sleeve 52 is rigid, it is very difficult to pull the sleeve off elongate member 6 and considerable force would be required to do this.

Attachment means such as eyelet 56 is provided on the sleeve 52 to enable a cord and safety harness to be attached to the sleeve. Consequently, a user can wear a safety harness and move along the direction of the net. The sleeve 52 will slide freely along the net as a result of being pulled by the user safely attaching a user to the net track.

It should be understood that the sleeve does not need to be elongate and merely requires an inner surface that partially surrounds the elongate member 6 to prevent removal therefrom. So long as a gap is provided, such as slot 54, the sleeve will be able to slide along the elongate member 6. Also, the profile of inner surface 53 does not have to exactly match the shape of outer surface of elongate member 6. A series of protrusions (not shown) may be provided on surface 53 to reduce friction between the sleeve and elongate member 53.

The safety device does not have to be used with the net track described above and could also be used in any situation where a user is required to be attached to a railing, such as on oil rigs and ships etc. Finally, opening means (not shown) could be provided on the sleeve 52 to enable the sleeve to be easily removed an attached to the track. For example, the sleeve could be hinged and have locking means to lock the hinges closed.

It will be appreciated by persons skilled in the art that the above embodiment has been described by way of example only and not in any limitative sense, and that various alterations and modifications are possible without departure from the scope of the invention as defined by the appended claims.

## Claims

1. A track comprising:
a first elongate flexible member arranged substantially parallel to a second elongate flexible member; and
a flexible net extending between said first and second elongate flexible members.

2. A track according to claim 1, wherein the net forms a closed loop encircling said first and second elongate flexible members, the net being crimped or stitched between said first and second elongate members.

3. A track according to claim 1, wherein said first elongate flexible member has a substantially hollow portion and further comprises an elongate slot formed therein, the flexible net being attached to a stop member disposed inside said first elongate member, the stop member having a dimension larger than the width of said elongate slot to prevent removal of the flexible net and stop member from said first elongate flexible member.

4. A tractor for a track comprising a first elongate flexible member arranged substantially parallel to a second elongate flexible member and a flexible net extending between said first and second elongate flexible members, the tractor comprising:
a body;
a first wheel rotatably mounted to the body and arranged to engage a first side of a net in use;
a second wheel rotatably mounted to the body and arranged to engage a second side of the net opposite to the first side; and
drive means for rotating at least one of the wheels to move the tractor along the net;
wherein said first and second wheels are arranged to rest on said first or second elongate member in use to retain contact between the wheels and the net.

5. A tractor according to claim 4, further comprising a third wheel rotatably mounted to the body and arranged to engage said first side of the net, wherein said second wheel is disposed between said first and third wheels along the direction of the net.

6. A tractor according to claim 4 or 5, further comprising a winch.

7. A track and tractor system comprising a track according to any one of claims 1 to 3 and a tractor according to any one of claims 4 to 6.

8. A safety device comprising:
a body slidably mountable on a track, the body defining an inner surface arranged to partially surround an outer surface of a track in use to prevent removal of the body from the track, the body further defining a gap to enable the body to slide past obstacles projecting from said track; and
attachment means disposed on the body to enable a cord to be attached to the body.

9. A device according to claim 8, wherein the body defines an elongate sleeve and the gap is defined by an elongate slot formed in the sleeve.

10. A device according to claim 8 or 9, further comprising a plurality of protrusions disposed on the inner surface.

11. A device according to any one of claims 8 to 10, wherein the attachment means comprises an eyelet.

12. A track and safety device system comprising a track according to any one of claims 1 to 3 and a safety device according to any one of claims 8 to 11.
